Europäisches Patentamt

European Patent Office

Office européen des brevets

(19)

(11) Numéro de publication: **0 230 441**

**B1**

(12)

# FASCICULE DE BREVET EUROPEEN

(45) Date de publication du fascicule du brevet: **25.04.90**

(21) Numéro de dépôt: **86904229.1**

(22) Date de dépôt: **23.07.86**

(86) Numéro de dépôt international:
**PCT/FR86/00263**

(87) Numéro de publication internationale:
**WO 87/00631 29.01.87 Gazette 87/03**

(51) Int. Cl.⁵: **G 01 N 25/14**

(54) **PROCEDES ET LEURS DISPOSITIFS DE MISE EN OEUVRE, POUR LA MESURE DU TAUX D'INCONDENSABLES DANS UN MELANGE GAZEUX.**

(30) Priorité: **25.07.85 FR 8511652**

(43) Date de publication de la demande:
**05.08.87 Bulletin 87/32**

(45) Mention de la délivrance du brevet:
**25.04.90 Bulletin 90/17**

(84) Etats contractants désignés:
**AT BE CH DE FR GB IT LI LU NL SE**

(56) Documents cités:
**DE-A-2 846 826**
**DE-C-3 224 506**
**GB-A-1 085 825**
**US-A-2 967 450**

(73) Titulaire: **ECOLE NATIONALE SUPERIEURE DES INDUSTRIES AGRICOLES ET ALIMENTAIRES E.N.S.I.A.A.**
**1, avenue des Olympiades**
**F-91305 Massy (FR)**

(73) Titulaire: **Etablissements J.E. DUPRAT S.A.**
**20 avenue d'Aubière Z.I.**
**F-63800 Cournon (FR)**

(72) Inventeur: **TRYSTRAM, Gilles**
**7, avenue de la Convention**
**F-94110 Arcueil (FR)**
Inventeur: **VASSEUR, Jean**
**7, rue Brezin**
**F-75014 Paris (FR)**

(74) Mandataire: **Chanet, Jacques**
**Conseil en Brevets 129 Avenue de Royat B.P. 27**
**F-63400 Chamalières (FR)**

Courier Press, Leamington Spa, England.

## Description

La présente invention est du domaine des appareils de mesure et elle a plus particulièrement pour objet un procédé et un dispositif de mesure du taux d'incondensables présents dans un mélange gazeux, notamment la vapeur considérée comme fluide caloporteur.

On rappelle que l'eau destinée a alimenter les chaudières provenant du reseau de distribution subit en général avant son entrée dans la chaudière deux opérations: un passage sur colonne échangeuse d'ions en vue de sa déminéralisation, et un dégazage thermique; malgré ce dégazage il subsite dans l'eau un taux résiduel d'air que l'on retrouve dans la vapeur sous forme d'incondensables. Une autre cause de la présence d'air dans la vapeur réside dans une mauvaise purge initiale des tuyauteries et de l'enceinte de vaporisation ou d'échange.

Dans le cas d'utilisation de la vapeur comme fluide caloporteur dans un échangeur la présence d'incondensables dans la vapeur a pour résultat global d'une part la diminution du flux de chaleur entre la vapeur et la paroi d'échange; et d'autre part l'apparition de zones surchauffées par rapport à d'autres sur la paroi d'échange.

On pallie généralement ces inconvénients dus à la présence des incondensables, par des purges périodiques ou continues c'est-à-dire des rejets de vapeur vers l'extérieur de l'échangeur; ces purges sont faites généralement de façon systématique de temps à autre sans critère précis, donc indépendamment du taux réel d'incondensables dans la vapeur; il résulte de cette façon de faire que, soit les purges sont insuffisantes et se manifestent alors les inconvénients précités, soit les purges sont trop fréquentes et il s'en suit des pertes d'énergie conséquentes. La façon rationnelle consiste bien entendu à purger l'installation en fonction du taux d'incondensables présents dans les vapeurs; ceci implique l'évaluation du taux de ces derniers.

On connait deux méthodes de mesure du taux des incondensables, toutes deux nécessitant en général une pesée; suivant une première méthode on prélève une partie représentative du mélange gazeux et on la condense dans un récipient contenant de l'eau froide, au-dessous d'une éprouvette retournée en gazomètre; au bout d'un certain temps on lit le volume de gaz recueilli et on mesure l'augmentation de poids d'eau du récipient due au condensat, on en déduit le taux d'incondensables; une telle méthode est peu pratique en raison notamment de son caractère discontinu. Une deuxième méthode comme dans D—A—3224506 consiste a mesurer séparément d'une part le débit instantané des condensats par pesée et d'autre part le débit instantané des gaz incondensables par exemple par mesure de pression dans une enceinte à fuite calibrée; le rapport de ces deux débits donne le taux d'incondensables; mais pour de faibles débits, notamment sur les gaz, cette dernière mesure est particulièrement imprécise surtout pour des faibles taux d'incondensables.

Le but de la présente invention est précisément de proposer des moyens, procédé et dispositifs, de mesure du taux d'incondensable à la fois commode précise, continue, no consommant qu'un faible débit de prélèvement, n'exigeant pas d'intervention manuelle mais pouvant au contraire déclencher de façon automatique des opérations de purges, donc des moyens permettant une gestion tout à fait rationnelle des purges.

L'idée mère de la présente invention repose sur l'observation du fait que dans un conduit de section suffisamment petite, le condensat et les incondensables se présentent sous la forme d'une succession de fractions de liquide et de fractions de gaz séparées par des ménisques, fractions dites respectivement par simplification "gouttes" et "bulles", gouttes et bulles ayant des longueurs mesurables, le rapport des longueurs respectives étant constant en moyenne pour un taux donné d'incondensables; par ailleurs ce rapport de deux longueurs est largement indépendant de la vitesse de passage dans le conduit de sorte que le débit de prélèvement n'a pas à être connu, ni constant d'une minute à l'autre, ni égal d'une voie de mesure sur l'autre dans le cas d'une pluralité de voies de mesure ce qui simplifie considèrablement la mesure.

Le procédé de mesure selon l'invention, consiste donc à évaluer le rapport des longueurs des bulles à celle des gouttes. Cette évaluation peut être faite de différentes façons relevant toutes de l'invention en utilisant les propriétés physiques nettement differenciées des bulles et des gouttes; à titre indicatif et non limitatif cette évaluation pourra être faite par voie pondérale, par voie optique, etc. C'est la méthode optique qui a fait l'objet d'un développement préféré de l'invention et dont des exemples de réalisation sont donnés ci-après.

Suivant la présente invention un dispositif de mesure du taux d'incondensables présents dans un mélange gazeux est caractérisé d'une manière générale en ce qu'il comprend pour agir en combinaison: des moyens de prélèvement à débit constant d'une partie représentative dudit mélange gazeux, un condenseur constitué d'un tube de diamètre intérieur suffisamment petit pour permettre l'entrainement isocinétique des fractions d'incondensables, dites bulles, et des fractions de condensat, dites gouttes, formées par la condensation des condensables dans ledit tube, un tube transparent, dit de mesure, ayant un conduit de section sensiblement égale ou inférieure à celle du tube condenseur, ledit tube de mesure étant constitué d'un matériau ayant un indice de réfraction proche de celui du condensat, un ensemble émetteur de lumière et récepteur photoélectrique, agencés de manière telle que la direction du pinceau est sensiblement perpendiculaire à l'axe du tube de mesure et que le flux lumineux du pinceau est transmis de façon différente selon que c'est une bulle ou une goutte qui est présente à l'intérieur du tube de mesure sur son trajet, et que le récepteur délivre une tension basse ou une tension haute selon que c'est une bulle ou une goutte qui est présente sur le trajet, discriminant ainsi nettement la présence d'une bulle ou d'une goutte sur le trajet. Par lumière on entend l'ensemble des radiations lumineuses du spectre allant de l'ultraviolet à l'infra-rouge.

Suivant une première variante de réalisation, la lumière est générée en un pinceau de lumière parallèle, et sensiblement cylindrique de section comparable à la section interne du conduit du tube de mesure, de telle sorte que l'intersection du faisceau émis et du conduit est approximativement ponctuelle c'est-à-dire de petite dimension par rapport à la longueur des gouttes; cette variante de dispositif se prêtera plus particulièrement à une méthode d'évaluation numérique que sera décrite plus loin.

Suivant une seconde variante de réalisation, le tube de mesure est rectiligne et d'une longueur telle qu'il contienne un certain nombre de gouttes et de bulles alternées, le pinceau a une forme parallèlipèdique très aplatie d'épaisseur sensiblement égale au diamètre du conduit, le plan médian du faisceau se confondant avec l'axe du tube de mesure, de telle sorte que l'intersection du faisceau et du conduit est approximativement linéaire; cette seconde variante de dispositif se prêtera plus particulièrement à une méthode d'évaluation analogique qui sera décrite plus loin.

Selon la présente invention le procédé général de mesure du taux d'incondensables présents dans un mélange gazeux, ledit procédé mettant en oeuvre un dispositif tel que décrit plus haut de manière générale, consiste à amener à vitesse sensiblement constante, ou encore à variation lente, la succession des bulles et des gouttes dans le tube de mesure, et à mesurer par voie optique les longueurs respectives des bulles et des gouttes passant successivement dans le tube de mesure, et à déduire du rapport de la longueur des bulles à la longueur des gouttes, le taux d'incondensables présents dans le mélange gazeux.

Suivant la variante d'évaluation numérique du procédé, la mesure des longueurs des bulles et des gouttes est réalisée par la mesure du temps entre les passages, en un point donné du tube de mesure, des ménisques successifs séparant les gouttes des bulles; de préférence la mesure de temps est faite par référence à une horloge dont la période ou base de temps est très petite par rapport à la durée de passage entre deux ménisques successifs.

L'évaluation du taux d'incondensables peut être d'au moins deux des mesures du groupe de mesures incluant la mesure du temps cumulée du passage des gouttes; tg, la mesure du temps cumulée du passage des bulles: tb, la mesure cumulée du temps de passage des gouttes et des bulles; tt, ces mesures étant réalisées sur une succession assez nombreuse de gouttes et de bulles, en prenant en compte l'un des rapports du groupe de rapports incluant: tb/tg, tb/tt, tg/tt, tt-tg/tt. Le temps total peut être compté sur un nombre d'alternances prédéterminé, ou encore sur une durée prédéterminée; dans une variante de cette deuxième méthode le temps de "présélection du temps de mesure" est dit glissant en ce sens que l'on corrige la valeur affichée du taux d'incondensables "en tendance" à partir des dernières mesures acquises en même temps qu'on efface les plus anciennes, ce que les cartes à microprocessus avec mémoire permettent de réaliser facilement; ainsi il n'est pas nécessaire d'attendre la fin du temps présélectionné pour avoir la nouvelle valeur "rafraîchie".

Suivant la variante d'évaluation analogique, la déduction du rapport de la longueur des bulles à la longueur des gouttes résulte directement de la "pesée optique" de l'ensemble des gouttes et des bulles présentes à l'intersection linéaire du faisceau et du conduit.

La présente invention sera mieux comprise et des détails en relevant apparaîtront à la description qui va être faite des moyens généraux et des variantes de méthode d'utilisation des procédé et dispositifs de l'invention, en relation avec les figures des planches annexées dans lesquelles:

— La fig. 1 est un schéma général des moyens mis en oeuvre par l'invention,

— Les fig. 2a à 2d illustrent schématiquement suivant une coupe à travers le conduit, les effets différentiels produits sur le pinceau lumineux, d'une part par transmission (2a, 2b), d'autre part par réflexion (2c, 2d) lors du passage d'une goutte (2a, 2c) et lors du passage d'une bulle (2b, 2d),

— la fig. 3 est un graphe des créneaux de tension brute, puis remise en forme, traduisant la succession des "gouttes" et des bulles,

— la fig. 4 est un schéma général des moyens d'évaluation du taux d'incondensables suivant une première méthode,

— la fig. 5 est un schéma général des moyens d'évolution du taux d'incondensables suivant une seconde méthode.

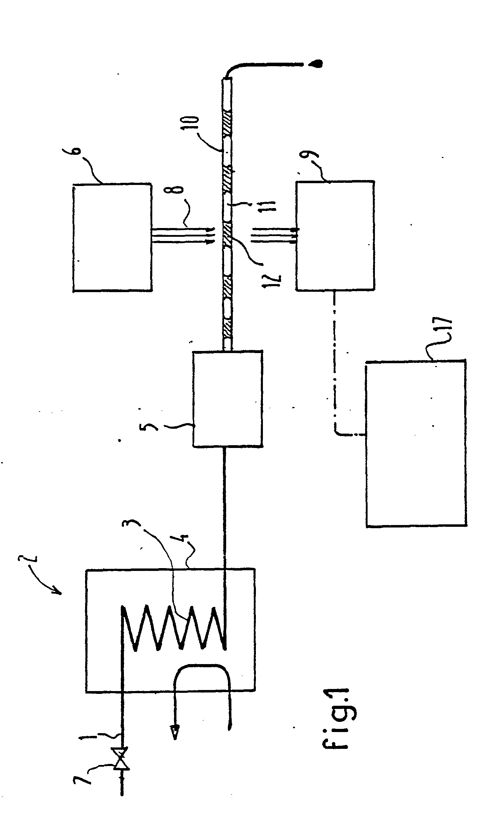

Sur la fig. 1 un dispositif de mesure du taux d'incondensables comprend, un tube de prélèvement 1, un condenseur 2 constitué d'un tube-serpentin 3 et d'une enceinte à fluide de refroidissement 4, des moyens 5 régulateurs de débit tels que pompe péristaltique, un ensemble émetteur 6 du faisceau 8 de lumière parallèle et récepteur photoélectrique 9, un tube de mesure transparent 10, d'un diamètre intérieur de 1 à 2 mm.

On notera que les moyens régulateurs de débit sont facultatifs, que lorsqu'ils sont souhaités ils peuvent aussi être situés en amont du condenseur, qu'ils peuvent être constitués d'une simple vanne 7, à pointeau par exemple, s'il s'agit de prélever une vapeur sous pression par rapport à l'atmosphère.

On a représenté dans le tube de mesure 10 une succession de bulles telles que 11 et de gouttes telles que 12 séparées entre elles par des ménisques dont la forme dépend de la nature du matériau constituant le tube de mesure et de la nature du condensat; dans le cas général le condensat est l'eau et le matériau est le verre; on a représenté sur la fig. 1 une forme de réalisation adaptée à la première variante dans laquelle l'évaluation procède de la mesure de temps de passage; la pinceau 8 est alors cylindrique et de faible diamètre et son intersection avec le conduit du tube 10 est quasi ponctuelle, c'est-à-dire faible devant la longueur des gouttes.

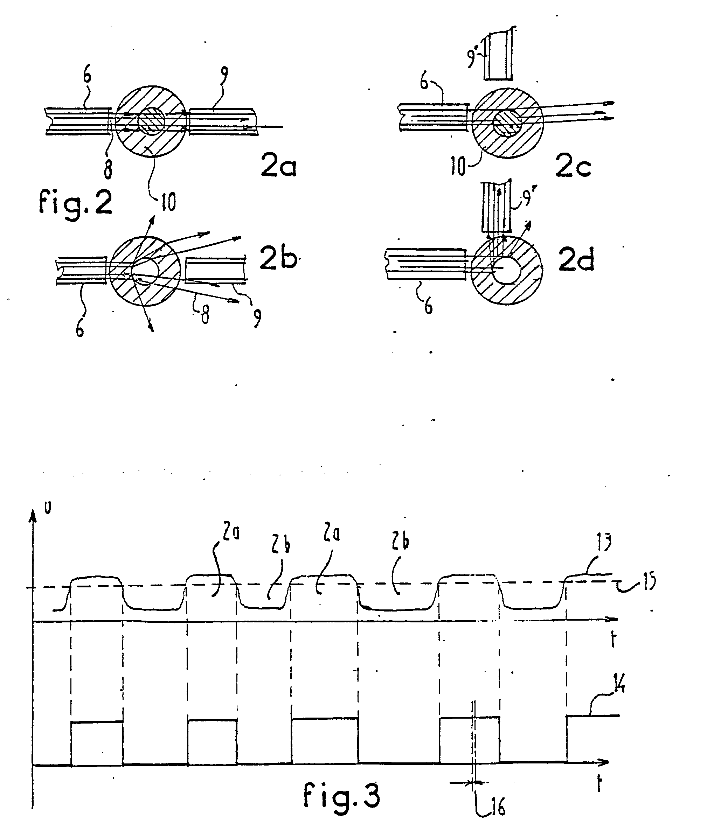

Sur les fig. 2, qui sont des coupes par un plan contenant le pinceau 8 et perpendiculaire au tube 10, on a illustré la situation dans laquelle une goutte se trouve à l'intersection du conduit et du pinceau (fig. 2a), et le situation dans laquelle c'est une bulle qui se trouve à cette intersection (fig. 2b). Dans la situation 2a le pinceau 8 provenant de l'émetteur 6, par l'intermediaire d'un fibre optique par exemple, est relativement peu dévié en traversant le conduit du tube 10 en raison des indices de refraction relativement proche de l'eau (n=1,33) et du verre (n=1,5); le pinceau est donc recueilli dans sa quasi totalité par le capteur 9 qui est alors excité; au contraire dans la situation 2b le même pinceau est notablement dévié en raison de la différence des indices du verre et de l'air (n=1) constituant la bulle et le capteur 9 est peu excité.

Les fig. 2c et 2d illustrent un montage du capteur 9 avec un axe de réception perpendiculaire à l'axe d'emission du pinceau, et dans ce cas on utilisera l'effet de réflexion: lorsque le pinceau rencontre une bulle (fig. 2d) dans le conduit il est réfléchi en direction du capteur qui est alors excité; si le pinceau rencontre une goutte (fig. 2c), il sera peu réfléchi vers le capteur 9 qui sera alors peu excité. On peut encore imaginer un montage comportant à la fois un capteur monté tel que 9 et un capteur monté tel que 9'.

Sur la fig. 3 on a représenté par un graphe 13 la tension électrique $u$ aux bornes de la cellule du capteur 9, et par le graphe 14 une tension rectifiée à partir des franchissements du seuil 15 par la tension du graphe précédent. Les créneaux du graphe 14 représentent donc la succession dans le temps des gouttes et des bulles dans le conduit de préférence selon la norme TTL (0 ou 5V continu). Le procédé de l'invention va consister alors à traiter le signal du graphe 14 en mesurant par référence à une période 16 d'horloge, la durée des créneaux d'eau ou. d'air, puis à cumuler ces durées respectives pour en faire le rapport et afficher un résultat.

Ces derniers moyens dits calculateurs, représentés en 17 sur la fig. 1 peuvent prendre deux formes suivant la méthode de calcul choisie.

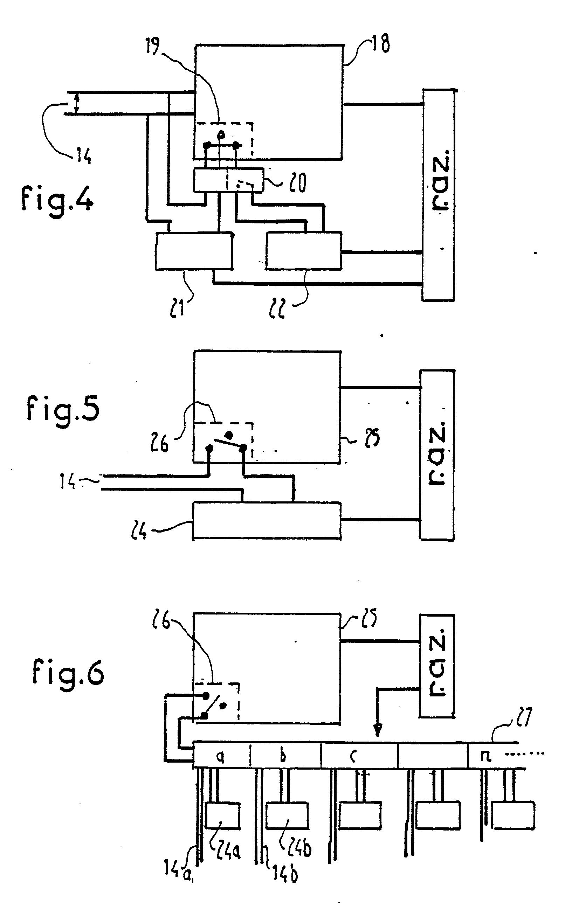

Sur la fig. 4 on a représenté les moyens de calcul par présélection du nombre "d'impulsions eau"; ces moyens comprennent un compteur 18 des impulsions eau, incorporant un relais-maître 19; le compteur 18 est relié au capteur 9 par une ligne 14 portant les signaux, le relais-maître arrêtant simultanément grâce à un relais double 20 le chronomètre 21 dit de "mesure du temps eau" et le chronomètre 22 dit de "mesure de temps total." "Le chronomètre temps eau" mesure , pendant la durée nécessaire à la présélection, le temps cumulé de passage des gouttes d'eau tandis que le chronomètre "temps total" mesure la durée séparant la première impulsion eau de la dernière prise en compte dans le mesure.

Sur la fig. 5 on a représenté les moyens de calcul par présélection du temps total; ces moyens comprennent un chronomètre 24 "temps eau", un chronomètre programmable 25 "temps total" incorporant un relais 26 commandant à l'issue de la programmation l'arrêt du chronomètre 24 dont la lecture peut donner directement le taux recherché.

Sur la fig. 6, pour $n$ voies de mesure en parallèle, le chronomètre 25 peut être commun chaque voie demandant seulement un chronomètre tel que 24. Grâce au relai maître 26 qui commande pour chaque voie un relai multiple 27.

Ces deux exemples de méthodes ne sont donnés qu'à titre indicatif des possibilités de mesure, réalisables à partir du signal logique (14), certaines fonctions pouvant être réaliser par une carte à microprocessues.

Revenant à la fig. 1 on notera que plusieurs ensembles "émetteurs-tube de mesure-capteur" peuvent, être montés en parallèle en aval d'une pompe péristaltique à plusieurs voies et reliés soit à autant de calculateurs 17, soit à un seul calculateur auscultant séquentiellement chacun des ensembles. D'une autre manière et grâce à la simplicité d'un ensemble comprenant un condenseur, un émetteur, un tube de mesure, un capteur et un rectificateur on peut collecter en divers points d'une installation de vapeur une tension en créneaux 14 et la diriger vers un centre calculateur unique opérant séquentiellement sur les divers points.

La présente invention trouve son application dans le contrôle de la vapeur utilisée dans les échangeurs à surface raclée, dans le contrôle de la vapeur produite par une chaufferie, dans la gestion des purges d'un séchoir à cylindre, dans la gestion des purges d'un évaporateur, notamment à multiple effet, dans la gestion du brassage des purges d'un stérilsateur, dans la gestion des purges d'un condenseur à paroi d'échange etc...

**Revendications**

1. Dispositif de mesure de taux "d'incondensables" présents dans un mélange gazeux, caractérisé:

en ce qu'il comprend pour agir en combinaison:

— des moyens (1, 5, 7) de prélèvement à débit sensiblement constant, d'une partie représentative dudit mélange gazeux,

— un condenseur (2) constitué d'un tube de diamètre intérieur constant et suffisamment petit pour permettre l'entrainement isocinétique des fractions d'incondensables, dites bulles, et des fractions de condensat, dites gouttes, formées par la condensation des condensables dans ledit tube,

— un tube transparent (10), dit de mesure, ayant un conduit, de section sensiblement égale ou inférieure à celle du tube condenseur, ledit tube de mesure étant constitué d'un matériau ayant un indice de réfraction proche de celui du condensat,

— un ensemble émetteur (6) de lumière et capteur (9) photo-électrique, agencés de manière telle que la direction du pinceau est sensiblement perpendiculaire à l'axe du tube de mesure et que le trajet du pinceau est modifié de façon différente selon que c'est une bulle (11) ou une goutte (12) qui est présente à l'intérieur du tube de mesure sur son trajet, et que le capteur délivre une tension basse ou une tension haute discriminant nettement la présence d'une bulle ou d'une goutte sur le trajet.

2. Dispositif selon la revendication 1, caractérisé:

en ce que l'émetteur (6) emet un pinceau (8) de lumière parallèle, le pinceau étant sensiblement cylindrique de section comparable à la section interne du conduit du tube de mesure, de telle sorte que l'intersection du faisceau et du conduit est approximativement ponctuelle;

3. Dispositif selon la revendication 1, caractérisé:

— en ce que le tube de mesure est rectiligne et d'une longueur telle qu'il contienne un certain nombre de gouttes et de bulles alternées, et

— en ce que le pinceau a une forme parallèlipèdique très aplatie d'épaisseur sensiblement égale au diamètre du conduit, le plan médian du faisceau se confondant avec l'axe du tube de mesure,

de telle sorte que l'intersection du faisceau et du conduit est approximativement linéaire;

4. Procédé d'évaluation du taux d'incondensables présents dans un mélange gazeux, ledit procédé mettant en oeuvre un dispositif selon la revendication 1, caractérisé:

en ce qu'il consiste:

— à amener à vitesse sensiblement constante la succession des bulles et des gouttes dans le tube de mesure, et

— à mesurer par voie optique les longueurs respectives des bulles et des gouttes présentes dans le tube de mesure, et déduire du rapport de la longueur des bulles à la longueur des gouttes le taux d'incondensables présents dans le mélange gazeux;

5. Procédé selon les revendication 2 et 4, càractérisé:

en ce que la mesure des longueurs des bulles et des gouttes est réalisée par la mesure du temps entre les passages en un point donné du tube de mesure, des ménisques successifs séparant les gouttes des bulles;

6. Procédé selon la revendication 5, caractérisé:

en ce que ladite mesure de temps est faite par référence à une horloge dont la période est très petite par rapport à la durée de passage entre deux ménisques successifs;

7. Procédé selon la revendication 6, caractérisé:

en ce que l'évaluation du taux d'incondensables est déduite d'au moins deux des mesures du groupe de mesures incluant la mesure du temps cumulée du passage des gouttes: tg, la mesure du temps cumulée du passage des bulles: tb, la mesure cumulée du temps de passage des gouttes et des bulles: tt, ces mesures étant réalisées sur une succession assex nombreuse de gouttes et de bulles, en prenant en compte l'un des rapports du groupe de rapports incluant: tb/tg, tb/tt, tg/tt, tt-tg/tt;

Procédé selon la revendication 7, caractérisé:

en ce que le temps total est compté sur un nombre d'alternances prédéterminé;

9. Procédé selon la revendication 7, caractérisé:

en ce que le temps total est compté sur une durée prédéterminée;

10. Procédé selon les revendications 3 et 4, caractérisé:

en ce que la déduction du rapport de la longueur des bulles à la longueur des gouttes résulte directement de la "pesée optique" de l'ensemble des gouttes et des bulles présentes à l'intersection linéaire du faisceau et du conduit.

**Patentansprüche**

1. Vorrichtung zum Messen des Anteiles von nichtkondensierbaren Bestandteilen, die in einem Gasgemisch vorliegen, dadurch gekennzeichnet, daß sie in Kombination umfaßt:

— Mittel (1, 5, 7) zum Entnehmen eines repräsentativen Teiles des Gasgemisches bei im wesentlichen konstantem Durchsatz;

— einen Kondensator (2), der aus einer Leitung von konstanter lichter Weite gebildet und genügend klein ist, um den isokinetischen Durchfluß von Fraktionen der nichtkondensierbaren Bestandteile, "Blasen" genannt und von Fraktionen des Kondensats, "Tropfen" genannt, zu erlauben, die durch die Kondensation des Kondensierbaren in der Leitung gebildet sind;

— eine transparente Hülse (10), die sogenannte Meßhülse, die einen Strömungsquerschnitt hat, der gleich oder kleiner wie jener der Kondensatorleitung ist und die aus einem Material besteht, dessen Brechungsindex ähnlich jenem des Kondensates ist;

— eine photoelektrische Lichtquelle (6) und einen Empfänger (9), derart gestaltet, daß die Richtung der Strahlen im wesentlichen senkrecht zur Achse der Meßhülse verläuft, und daß der Strahlengang unterschiedlich abgewandelt wird, je nachdem, ob eine Blase (11) oder ein Tropfen (12) im Inneren der Meßhülse sich auf dem Wege befindet, wobei der Empfänger eine niedrige oder eine hohe Spannung abgibt, und hierbei klar zwischen der Anwesenheit einer Blase o-der eines Tropfens auf dem Wege unterscheidet.

2. Vorrichtung nach Anspruch 1, dadurch gekennzeichnet, daß die Lichtquelle einen Strahl (8) parallelen Lichtes aussendet, wobei der Lichtstrahl im wesentlichen zylindrisch und von einem Querschnitt ist, der dem Querschnitt der Meßhülse gleichkommt, derart, daß die Schnittstelle des Strahlenbündels und der Leitung im wesentlichen punktförmig ist.

3. Vorrichtung nach Anspruch 1; dadurch gekennzeichnet, daß die Meßhülse geradlinig ist und eine solche Länge hat, daß sie eine gewisse Anzahl von Tropfen und von Blasen abwechselnd enthält, und daß der Lichtstrahl eine sehr abgeflachte, parallelepipedische Form hat, von einer Stärke, die im wesentlichen gleich der lichten Weite der Leitung ist, wobei die Mittelebene des Strahlenbündels mit der Achse der Meßhülse zusammenfällt, derart, daß die Schnittstelle des Strahlenbündels und der Leitung annähernd linear ist.

4. Verfahren zum Messen des Anteiles von nichtkondensierbaren Bestandteilen, die in einem Gasgemisch vorliegen, wobei mit dem Verfahren eine Vorrichtung gemäß Anspruch 1 betriben wird, dadurch gekennzeichnet, daß es in folgendem besteht:

— bei im wesentlichen konstanter Geschwindigkeit Blasen und Tropfen in die Meßhülse einzuführen und

— auf optischem Wege die jeweiligen Längen der in der Meßhülse vorhandenen Blasen und Tropfen zu messen und aus dem Verhältnis der Länge der Blasen zur Länge der Tropfen den Anteil an nichtkondensierbaren Bestandteilen, die im Gasgemische vorhanden sind, abzuleiten.

5. Verfahren nach den Ansprüchen 2 und 4, dadurch gekennzeichnet, daß das Messen der Länge der Blasen und der Tropfen durch Messen der Zeitdauer zwischen den Durchgängen durch eine bestimmte Stelle der Meßhülse erfolgt, wobei aufeinanderfolgende Menisken die Tropfen und die Blasen voneinander trennen.

6. Verfahren nach Anspruch 5, dadurch gekennzeichnet, daß die genannte Zeitmessung vorzugsweise mit einer Uhr durchgeführt wird, deren Periode in Bezug auf die Dauer des Durchganges zwischen zwei aufeinanderfolgende Menisken sehr klein ist.

7. Verfahren nach Anspruch 6, dadurch gekennzeichnet, daß das Erfassen des Anteiles der nichtkondensierbaren Bestandteile aus wenigstens zwei von einer Reihe von Meßgruppen abgeleitet wird, eingeschlossen die Messung der kumulierten Zeit des Durchganges der Tropfen tg, des Messens der kumulierten Zeit des Durchganges der Blasen tb, des Messens der kumulierten Zeit des Durchganges der Tropfen und der Blasen tt, wobei diese Messungen bei einer genügend großen Folge von Tropfen und Blasen durchgeführt werden, wobei eines der Verhältnisse aus der Gruppe von Verhältnissen gebildet wird: tb/tg, tb/tt, tg/tt, tt-tg/tt.

8. Verfahren nach Anspruch 7, dadurch gekennzeichnet, daß die Gesamtzeitdauer auf eine vorbestimmte Zahl von Wechseln bezogen wird.

9. Verfahren nach Anspruch 7, dadurch gekennzeichnet, daß die Gesamtzeitdauer auf eine vorbestimmte Dauer bezogen wird.

10. Verfahren nach den Ansprüchen 3 und 4, dadurch gekennzeichnet, daß die Ermittlung des Verhältnisses der Länge der Blasen zur Länge der Tropfen direkt aus der "optischen Wägung" der Gesamtheit der im linearen Abschnitt des Strahlenbündels und der Leitung enthaltenen Tropfen und Blasen erfolgt.

**Claims**

1. Device for measuring the content of "uncondensable substances" present in a gaseous mixture, characterized in that it comprises, so as to act in combination, means (1, 5, 7) for the extraction at a substantially constant rate of a representative portion of the said gaseous mixture, a condenser (2) consisting of a tube of constant inside diameter sufficiently small to allow the isokinetic conveyance of the fractions of uncondensable substances, called bubbles, and fractions of condensate, called drops, formed as a result of the condensation of the condensable substances in the said tube, a transparent tube (10), called a measuring tube, having a conduit of a cross-section substantially equal to or less than that of the condensor tube, the said measuring tube consisting of a material having a refractive index near that of the condensate, and an assembly comprising a light transmitter (6) and a photoelectric sensor (9) which are designed in such a way that the direction of the beam is substantially perpendicular to the axis of the measuring tube, and that the path of the beam is modified differently, depending on whether there is a bubble (11) or a drop (12) present inside the measuring tube in its path, and that the sensor supplies a low voltage or a high voltage clearly discriminating between the presence of a bubble or the presence of a drop in the path.

2. Device according to Claim 1, characterized in that the transmitter (6) transmits a beam (8) of parallel light, the beam being of substantially cylindrical cross-section comparable to the inner cross-section of the conduit of the measuring tube, so that the intersection of the beam and the conduit is approximately at a point.

3. Device according to Claim 1, characterized in that the measuring tube is straight and of such a length that it contains a certain number of alternate drops and bubbles, and in that the beam has a highly flattened parallelepedic shape of thickness substantially equal to the diameter of the conduit, the mid-plane of the beam merging with the axis of the measuring tube, so that the intersection of the beam and the conduit is approximately linear.

4. Process for evaluating the content of uncondensable substances present in a gaseous mixture, the said process using a device according to Claim 1, characterized in that it involves conveying the succession of bubbles and drops through the measuring tube at a substantially constant speed, measuring optically the respective lengths of the bubbles and drops present in the measuring tube, and deducing the content of uncondensable substances present in the gaseous mixture from the ratio between the length of the bubbles and the lengths of the drops.

5. Process according to Claims 2 and 4, characterized in that the lengths of the bubbles and drops are measured by measuring the time between the passages of the successive meniscusses separating the drops from the bubbles, at a given point in the measuring tube.

6. Process according to Claim 5, characterized in that the said time measurement is carried out with reference to a clock, the period of which is very small in relation to the passage time between two successive meniscusses.

7. Process according to Claim 6, characterized in that the evaluation of the content of uncondensable substances is deduced from at least two of the measurements of the group of measurements which includes the cumulative measurement of the passage time of the drops: tg, the cumulative measurement of the passage time of the bubbles: tb, and the cumulative measurement of the passage time of the drops and bubbles: tt, these measurements being made on a reasonably numerous succession of drops and bubbles, taking into account one of the ratios of the group of ratios including tb/tg, tb/tt, tg/tt and tt-tg/tt.

8. Process according to Claim 7, characterized in that the total time is counted over a predetermined number of alternations.

9. Process according to Claim 7, characterized in that the total time is counted over a predetermined period.

10. Process according to Claims 3 and 4, characterized in that the ratio between the length of the bubbles and the length of the drops is deduced directly from the "optical weighing" of all the drops and bubbles present at the linear intersection of the beam and conduit.

fig.1

fig.2

2a

2b

2c

2d

fig.3

fig.4

fig.5

fig.6